**Europäisches Patentamt**

**European Patent Office**

**Office européen des brevets**

(19)

(11) Veröffentlichungsnummer : **0 153 645**
**B1**

(12) **EUROPÄISCHE PATENTSCHRIFT**

(45) Veröffentlichungstag der Patentschrift :
27.07.88

(51) Int. Cl.⁴ : **B 32 B 27/30, E 04 H 15/54**

(21) Anmeldenummer : **85101441.5**

(22) Anmeldetag : **11.02.85**

(54) Verbundwerkstoff.

(30) Priorität : **22.02.84 DE 3406278**
**07.12.84 DE 3444631**

(43) Veröffentlichungstag der Anmeldung :
**04.09.85 Patentblatt 85/36**

(45) Bekanntmachung des Hinweises auf die Patenterteilung : **27.07.88 Patentblatt 88/30**

(84) Benannte Vertragsstaaten :
**AT BE DE FR GB IT NL**

(56) Entgegenhaltungen :
**FR-A- 2 237 764**

(73) Patentinhaber : **HOECHST AKTIENGESELLSCHAFT**
**Postfach 80 03 20**
**D-6230 Frankfurt am Main 80 (DE)**

(72) Erfinder : **Neumann, Wolfgang**
**Balthasar-Neumann-Strasse 37**
**D-8264 Waldkraiburg (DE)**
Erfinder : **Hendriock, Hans-Jürgen, Dr.**
**Piracher Strasse 12a**
**D-8263 Burghausen (DE)**
Erfinder : **Fitz, Herbert, Dr.**
**Kantstrasse 41**
**D-8269 Burgkirchen (DE)**

**Beschreibung**

Die Erfindung betrifft einen Verbundwerkstoff aus einem Weich-PVC-Substrat, das mit einer Deckschicht und gegebenenfalls einer Versiegelungsschicht versehen worden ist.

Weichgemachtes Polyvinylchlorid wird für Oberflächenbezüge und -imprägnierungen, beispielsweise auf Geweben oder als Polsterbezug, in großem Ausmaß verwendet. Es ist bekannt, daß Oberflächen aus Weich-PVC neben allen bekannten Vorteilen den Nachteil einer etwas klebrigen Oberfläche aufweisen, die daher in beträchtlichem Ausmaß Ruß und Staub anzieht, so daß diese Eigenschaft den Gebrauchswert der so überzogenen Gegenstände vor allem auch im Außeneinsatz wesentlich vermindert. Daher werden Oberflächen aus Weich-PVC häufig mit einem sogenannten Decklack (Schlußstrich) aus Polyacrylat-Harzen versehen (vergleiche beispielsweise Kunststoff-Handbuch, Band II, Teil 1 : Polyvinylchlorid, Carl Hanser Verlag München, 1963, Seiten 427 bis 428). Zur Haftungsverbesserung wird meist ein gewisser Anteil an weichgemachtem PVC oder an Pasten-PVC zugesetzt. Jedoch sind auch diese mit einer Deckschicht aus Polyacrylat versehenen PVC-Substrate nicht völlig befriedigend. Sie neigen auch nach dieser Behandlung noch, wenn auch in geringerem Maße, zur Anschmutzung und besitzen außerdem eine ungenügende Chemikalienbeständigkeit und für den Außeneinsatz eine nicht ausreichende Witterungsstabilität. Die Polyacrylat-Deckschicht muß relativ dünn gehalten werden, da solche Deckschichten in größerer Schichtdicke bruchempfindlich werden und optisch sichtbare Bruchstellen ergeben, und eine solche relativ dünne Schicht vermag keine absolut vollständige Weichmacher-Sperrwirkung auszuüben.

Es besteht daher ein Bedürfnis nach einem entsprechend beschichteten Weich-PVC-Substrat, das die genannten Nachteile nicht aufweist.

Diesem Bedürfnis wird gemäß der vorliegenden Erfindung Rechnung getragen durch einen Verbundwerkstoff, bestehend aus

a) einer Substratschicht, die im wesentlichen aus Weich-PVC zusammengesetzt ist,

b) einer ein- oder beidseitig auf diese Substratschicht aufgebrachten Deckschicht aus

b[1]) 5 bis 100 Gew.-% einer Acrylatharz-Abmischung, bestehend aus 5 bis 60 Gew.-% an Weich-PVC oder einem innerlich weichgemachten Copolymerisat des Vinylchlorids und — ergänzend auf 100 Gew.-% — einem Acrylatharz, und

b[2]) 0 bis 95 Gew.-% eines fluorhaltigen Copolymeren, enthaltend 50 bis 20 Gew.-% an copolymerisierten Einheiten des Vinylidenfluorids, 10 bis 30 Gew.-% an copolymerisierten Einheiten des Hexafluorpropylens und copolymerisierte Einheiten des Tetrafluorethylens, wobei der Anteil der letzteren mindestens 30 Gew.-% im Copolymerisat beträgt, sowie copolymerisierte Einheiten eines anderen Fluorolefins oder Fluoralkylvinylethers in einer Menge von 0 bis 5 Gew.-%,

mit der Maßgabe, daß bei einem Gehalt von 0 bis 15 Gew.-% des fluorhaltigen Copolymeren b[2]) in der Deckschicht auf dieser noch

c) eine Versiegelungsschicht vorgesehen ist, die ausschließlich aus dem unter b[2]) definierten fluorhaltigen Copolymeren besteht.

Das im Rahmen dieses erfindungsgemäßen Verbundwerkstoffes als Komponente b[2]) der Deckschicht bzw. als Versiegelungsschicht eingesetzte fluorhaltige Copolymere besitzt eine Reihe von außergewöhnlichen Eigenschaften, die es für den Einsatz als Versiegelung geeignet machen : Es weist eine hohe Witterungsbeständigkeit, Öl- und Chemikalienresistenz auf ; es ist absolut feuchtigkeitsbeständig und verhindert die Wanderung von Weichmachern durch die Versiegelungsschicht hindurch ; es besitzt einen außerordentlich niedrigen Schmelz- bzw. Erweichungspunkt, und es besitzt bei höheren Gehalten an Vinylidenfluorid (> 30 Gew.-%) eine gute Löslichkeit in organischen Lösungsmitteln. Die letztgenannten Eigenschaften erleichtern das Aufbringen und die Ausbildung eines zusammenhängenden Versiegelungsfilms, ohne daß die darunterliegenden Schichten des Verbundwerkstoffs geschädigt werden. Schließlich sind diese fluorhaltigen Copolymeren stark antiadhäsiv und schmutzabweisend. Während sie jedoch für sich allein auf PVC praktisch überhaupt nicht haften und nach dem Aufbringen leicht wieder abgezogen werden können, gehen sie zusammen mit dem Polyacrylat-Harz der Deckschicht oder auf dieser überraschenderweise eine festhaftende Verbindung ein, und zwar auch dann, wenn dieses Polyacrylat-Harz mit PVC abgemischt ist.

Die erfindungsgemäß als Komponente b[2]) in der Deckschicht und/oder in der Versiegelungsschicht eingesetzten fluorhaltigen Copolymeren sind an sich bekannt. Ihre Herstellung erfolgt, wie beispielsweise beschrieben in der BE-A-844 965, durch Copolymerisation, vorzugsweise in wäßriger Suspension, in Gegenwart radikalbildender Katalysatoren wie beispielsweise Alkali- oder Ammoniumpersulfat. Geeignet für den Einsatz als Versiegelungsschicht für die erfindungsgemäßen Verbundwerkstoffe sind Copolymere, die 50 bis 20 Gew.-% an copolymerisierten Einheiten des Vinylidenfluorids, 10 bis 30 Gew.-% an copolymerisierten Einheiten des Hexafluorpropylens und (als Rest gegen 100 Gew.-%) copolymerisierte Einheiten des Tetrafluorethylens enthalten, wobei die letzteren mindestens 30 Gew.-% des Copolymeren ausmachen sollen. Vorzugsweise beträgt die Zusammensetzung 45 bis 30 Gew.-% an copolymerisierten Einheiten des Vinylidenfluorids, 15 bis 25 Gew.-% an copolymerisierten Einheiten des Hexafluorpropylens und (Rest gegen 100 Gew.-%) copolymerisierten Einheiten des Tetrafluorethylens, wobei die letzteren mindestens 30 Gew.-% des Copolymeren ausmachen sollen. Die genannten Copolymeren können

2

gegebenenfalls noch kleinere Anteile an copolymerisierten Einheiten mindestens eines anderen Fluorolefins oder Fluoralkylvinylethers, insbesondere des Perfluorpropylvinylethers, enthalten. Solche Copolymerisate sind bekannt beispielsweise aus der US-A-3 235 537 oder der EP-A-2 809. Die Menge dieser Einheiten soll 5 Gew.-%, vorzugsweise 3 Gew.-%, nicht übersteigen. Bevorzugt sind jedoch diejenigen Copolymeren, die ausschließlich aus copolymerisierten Einheiten des Vinylidenfluorids, Hexafluoropropylens und Tetrafluorethylens bestehen.

Die so beschriebenen Copolymeren besitzen, neben anderen günstigen Eigenschaften, im Falle höherer Gehalte an Vinylidenfluorid (> 30 Gew.-%) eine gute Löslichkeit in gängigen organischen Lösungsmitteln wie beispielsweise Methylethylketon, Aceton, Tetrahydrofuran, Ethylacetat oder Diisopropylketon sowie ferner einen sehr niedrigen — für Fluorpolymere ungewöhnlich niedrigen — Schmelzpunkt bzw. Schmelzbereich, der sich je nach Zusammensetzung im Bereich von 90 bis 180 °C bewegt. Daher ist es möglich, sowohl durch Auftragen einer solchen Lösung und anschließendes schonendes Verdampfen des Lösungsmittels als auch durch Aufbringen einer wäßrigen Dispersion und anschließendes Erwärmen bis auf 160 bis 180 °C, einen geschlossenen und gleichmäßigen Überzugsfilm zu erzielen.

Als Substrate für die erfindungsgemäßen Verbundwerkstoffe können flächige Gebilde aus weichgemachtem Polyvinylchlorid dienen, wie beispielsweise Planen, Folien, Bänder und dergleichen. Unter dem Ausdruck Weich-PVC sollen im Rahmen dieser Beschreibung alle PVC-Arten verstanden werden, die durch äußere Weichmacher plastifiziert worden sind, auch unter Einschluß der sogenannten polymeren Weichmacher. Es liegt auch im Rahmen dieser Erfindung, daß das äußerlich weichgemachte PVC zusätzlich kleinere Anteile an copolymerisierten Einheiten innerlich weichmachender Comonomerer enthält, wie zum Beispiel Vinylacetat, Acrylat oder Methacrylat.

Bevorzugt als Substrate sind mit Weich-PVC imprägnierte bzw. beschichtete Gewebe und auch andere textile Flächengebilde wie Gewirke und Vliese, die aus Naturfasern wie Baumwolle, halbsynthetischen Fasern wie Zellwolle oder Kunstseide oder vollsynthetischen Fasern wie Polyamid-, Polyacryl- oder vorzugsweise Polyesterfasern bestehen. Solche beschichteten Gewebe weisen vorzugsweise ein Flächengewicht von 200 bis 1 200 g/m² auf, jedoch kann die Beschichtungsmenge auch außerhalb dieser Grenzen liegen. Die Beschichtung aus Weich-PVC in Form eines Plastisols (bestehend aus etwa 40 bis 75, vorzugsweise 50 bis 70 Gew.-% PVC und etwa 25 bis 60, vorzugsweise 30 bis 50 Gew.-% Weichmacher) wird üblicherweise auf das textile Flächengebilde in mindestens zwei und höchstens in sechs Strichen auf beiden Seiten aufgetragen, wobei der erste Strich auf beiden Seiten gegebenenfalls einen Haftvermittler enthält. Das genannte Flächengebilde kann auch vollständig oder teilweise aus Glas oder anderen Mineralfasern bestehen. Es liegt gleichfalls im Rahmen dieser Erfindung, daß das Weich-PVC durch Zusatz entsprechender Hilfsstoffe ganz oder teilweise in eine porige oder zellige Struktur überführt wird. Ferner können dem Weich-PVC übliche Additive beigemischt werden, wie Füllstoffe und Pigmente, zum Beispiel Titandioxid, Antimon (III)-oxid oder Ruß oder ferner Stabilisatoren, Flammschutzmittel und Antistatika. Es sind für den erfindungsgemäßen Verbundwerkstoff aber auch Substrate einsetzbar, die durch Kaschierung von Geweben mit Weich-PVC Folien oder durch Coextrusion von Weich-PVC mit textilen Gebilden hergestellt worden sind. Alle so beschriebenen Flächengebilde sind unter dem Ausdruck « Substratschicht, die im wesentlichen aus Weich-PVC zusammengesetzt ist » zu verstehen.

Auf die Substratschicht ist ein- oder vorzugsweise beidseitig eine Deckschicht aufgebracht, die aus b¹) 5 bis 100 Gew.-% einer Acrylatharz-Abmischung und (gegebenenfalls) b²) aus 0 bis 95 Gew.-% des oben beschriebenen fluorhaltigen Copolymeren zusammengesetzt ist. Die Acrylatharz-Abmischung besteht aus Polyalkylacrylaten oder Polyalkylmethacrylaten oder deren Gemischen, wobei dieses Acrylatharz mit 5 bis 60 Gew.-%, vorzugsweise 5 bis 40 Gew.-%, an Weich-PVC oder insbesondere an einem innerlich weichgemachten Copolymerisat des Vinylchlorids abgemischt ist. Die Alkylreste der genannten Polyalkylacrylate und Polyalkylmethacrylate sind vorzugsweise kurzkettige Alkylreste mit 1 bis 4 C-Atomen. Besonders zu nennen ist Polymethylmethacrylat, besonders bevorzugt im Gemisch mit Polybutylacrylat. Diese Acrylatharze haften ohne Vorbehandlung des Substrates nur schwer an dem PVC der Substratschicht. Um aufwendige Vorbehandlungsschritte zu vermeiden, werden daher zweckmäßigerweise Anteile an vorzugsweise äußerlich weichgemachtem PVC (wie es oben definiert worden ist) oder aber an innerlich weichgemachtem PVC zugesetzt. Bei letzterem handelt es sich um Copolymere von Vinylchlorid mit Vinylacetat, mit Acrylaten, Methacrylaten Maleinsäureestern oder Fumarsäureestern. In diese Acrylatharz-Abmischung werden — bezogen auf das Gesamtgewicht der Mischung b¹) + b²) für die Deckschicht — noch b²) 0 bis 95 Gew.-% des oben beschriebenen fluorhaltigen Copolymeren eingearbeitet.

Bevorzugt werden 70 bis 95 Gew.-% und insbesondere 80 bis 90 Gew.-% — bezogen auf das Gesamtgewicht der Mischung für die Deckschicht — des fluorhaltigen Copolymeren der Komponente b²) zugemischt, wobei dann der Anteil der Acrylatharz-Abmischung b¹) 5 bis 30 und insbesondere 10 bis 20 Gew.-% beträgt. Wenn das fluorhaltige Copolymere b²) in der Deckschicht nur in kleinen Anteilen ≤ 15 Gew.-% oder gar nicht anwesend ist, so ist es erforderlich, auf dieser Deckschicht noch eine äußere Versiegelungsschicht vorzusehen, die ausschließlich aus dem unter b²) definierten fluorhaltigen Copolymeren besteht. Die beschriebenen Mischungen für die Deckschicht — entweder mit oder ohne fluorhaltiges Copolymer — werden aus organischen Lösungsmitteln wie Methylisobutylketon, Methylethylketon, Dimethylformamid, Cyclohexanon, Ethylacetat oder Tetrahydrofuran und anderen solchen Lösungsmitteln oder Gemischen solcher oder ähnlicher Lösungsmittel aufgebracht. Die Menge soll etwa 2 bis 100 g/m², vorzugsweise 2 bis 20 g/m² betragen, gegebenenfalls wird solchen Deckschichten ein Mattierungsmittel zugesetzt. Der Deckschicht können vor dem Aufbringen übliche Pigmente, Füllstoffe oder Antistatika beigemischt werden, wie zum Beispiel Titandioxid, Antimon (III)-oxid oder Ruß.

Auf die in dieser Art aufgebauten Flächengebilde wird gegebenenfalls das oben beschriebene fluorhaltige Copolymere, ebenfalls aus einer Lösung in einem organischen Lösungsmittel oder aber auch aus wäßriger Dispersion, aufgebracht. Das Auftragen der Deckschicht und gegebenenfalls dieser Versiegelungsschicht, erfolgt nach üblichen Methoden, beispielsweise durch Aufspritzen, durch Aufwalzen mit einer Rasterwalze, durch Aufbringen mit einer Rakel oder ähnliche Methoden. Die Dicke der Versiegelungsschicht ist nicht kritisch. Bereits 2 g/m² können für den angestrebten Versiegelungseffekt ausreichend sein. Je nach Einsatzzweck kann die aufgetragene Schicht ein Flächengewicht von bis 20 g/m², vorzugsweise bis zu 10 g/m², aufweisen. Der Versiegelungsschicht können vor dem Aufbringen übliche Pigmente, Füllstoffe oder Antistatika beigemischt werden, wie zum Beispiel Titandioxid, Antimon (III)-oxid oder Ruß.

Nach dem Aufbringen der Deckschicht oder der Versiegelungsschicht wird zunächst unter Erwärmen das organische Lösungsmittel bzw. das Wasser entfernt und anschließend die Erwärmung bis auf etwa 150 bis 180 °C fortgesetzt, wobei ein geschlossener und rißfreier Überzugsfilm gebildet wird. Im Falle des Aufbringens aus organischem Lösungsmittel kann auch ein Erwärmen bis zu geringeren Temperaturen für die Filmbildung bereits ausreichend sein.

Wenn der Gehalt an dem fluorhaltigen Copolymeren b²) in der Deckschicht mehr als 15 Gew.-% und insbesondere mehr als 70 Gew.-% beträgt, wird die angestrebte Weichmachersperrwirkung, zusammen mit den sonstigen vorteilhaften Eigenschaften erfindungsgemäß auch erreicht, wenn keine Versiegelungsschicht vorgesehen ist.

Die so definierten erfindungsgemäßen Verbundwerkstoffe besitzen eine hervorragende Schmutzabweisung und Beständigkeit gegen Witterungseinflüsse, Öl und Chemikalien wie auch gegen UV-Strahlung. Aufgrund dieser Eigenschaft sind sie für vielfältige Anwendungen geeignet, vor allem im Außenbereich und für den Bereich des sogenannten textilen Bauens. Als Beispiele für den Einsatz der erfindungsgemäßen Verbundwerkstoffe seien genannt :

Traglufthallen, Dachbahnen, Spannkonstruktionen, Trennwände, Silos und dergleichen. Ferner können daraus gefertigt werden : Zelte, Schwimmbeckenauskleidungen, Abdeckplanen z. B. für Lastkraftwagen, Containerhüllen, Transport- und Förderbänder.

Die Erfindung wird durch folgende Beispiele erläutert :

Herstellung des mit Deckschicht versehenen PVC-Substrats

A) Als Rohgewebe wird ein Polyestergewebe aus Polyestergarn ®Trevira hochfest mit folgenden Kennzahlen eingesetzt :

| | |
|---|---|
| Garnfeinheit (Kette/Schuß) : | 1 100/1 100 dtex |
| Fadenzahl (Kette/Schuß) | 9/9 pro cm |
| Bindung | Leinwand-1/1 |
| Dicke | 310 μm |
| Flächengewicht | 205 g/m². |

Das Rohgewebe ist mit PVC-Plastisol beschichtet, das 8 Gew.-% Titandioxid als Weißpigment enthält. Die sorgfältig getrocknete Beschichtung hat einen Gehalt an Weichmacher von 41 Gew.-%.

Das Flächengewicht beträgt 750 bis 800 g/m².

B) Auf dieses Substrat ist beidseitig eine Deckschicht, bestehend aus Polymethylmethacrylat und Weich-PVC (Weichmachergehalt 41 Gew.-%) im Verhältnis 60 : 40 Gewichtsteilen aufgebracht. Das Flächengewicht der Deckschicht beträgt etwa 8 g/m².

Herstellung der erfindunggemäßen Verbundwerkstoffe

Beispiel 1

Auf das obengenannte, mit der Deckschicht versehene PVC-Substrat wird nach dem Luftspritzverfahren einseitig ein fluorhaltiges Copolymeres folgender Zusammensetzung aus einer 50 gew.-%igen wäßrigen Dispersion aufgetragen :

30 Gew.-% copolymerisierte Vinylidenfluorid-Einheiten
15 Gew.-% copolymerisierte Hexafluorpropylen-Einheiten
55 Gew.-% copolymerisierte Tetrafluorethylen-Einheiten (Schmelzpunkt 154 °C).

Danach wird durch 15 minütiges Erhitzen auf 180 °C ein geschlossener Versiegelungsfilm gebildet. Die aufgetragene Versiegelungsschicht beträgt 17 g/m².

**0 153 645**

Beispiel 2

Gemäß der Arbeitsweise von Beispiel 1 wird auf das obengenannte, mit Deckschicht versehene PVC-Substrat aus wäßriger Dispersion (50 Gew.-%), ein fluorhaltiges Copolymeres aufgetragen, das folgende Zusammensetzung besitzt :

40 Gew.-% copolymerisierte Vinylidenfluorid-Einheiten
20 Gew.-% copolymerisierte Hexafluorpropylen-Einheiten
40 Gew.-% copolymerisierte Tetrafluorethylen-Einheiten,

und danach erwärmt und 15 min auf einer Temperatur von 160 °C gehalten. Auftragsmenge : 15 g/m².

Beispiel 3

Es wird nach dem gleichen Verfahren auf das gleiche Substrat das in Beispiel 2 beschriebene fluorhaltige Copolymerisat aufgetragen, jedoch nunmehr aus einer 5 gew.-%igen Lösung in Methylethylketon und dann zunächst für 15 min bei 70 °C und dann 15 min bei 170 °C getrocknet und eingebrannt. Auftragsmenge 14 g/m².

Beispiel 4

Mit Hilfe einer Streichrakel wird auf das mit PVC beschichtete Polyestergewebe A) einseitig eine Deckschicht-Mischung aufgebracht. Diese wird dadurch erhalten, daß zu 85 Gewichtsteilen (in 20 Gew.-%iger Lösung in Methylethylketon) des in Beispiel 2 beschriebenen fluorhaltigen Copolymeren 15 Gewichtsteile der unter B) beschriebenen Acrylatharzmischung aus Polymethylmethacrylat und Weich-PVC im Verhältnis 60 : 40 Gewichtsteile hinzugefügt werden.
Der so erhaltene Schichtkörper wird zunächst 10 Minuten bei 70 °C getrocknet und dann weitere 10 Minuten bei 160 °C eingebrannt. Die Auftragsmenge beträgt 18 g/m².

Beispiel 5

Mit Hilfe einer Streichrakel wird auf das mit PVC beschichtete Polyestergewebe A) einseitig eine Deckschicht-Mischung aufgebracht. Diese wird dadurch erhalten, daß zu 10 Gewichtsteilen (in 20 Gew.-%iger Lösung in Methylethylketon) des in Beispiel 2 beschriebenen fluorhaltigen Copolymeren 90 Gewichtsteile der unter B) beschriebenen Acrylatharzmischung aus Polymethylemthacrylat und Weich-PVC im Verhältnis 60 : 40 Gewichtsteile hinzugefügt werden. Die so erhaltene Deckschicht wird 10 min bei 100 °C getrocknet. Die Auftragsmenge beträgt 5 g/m².
Auf diese Schicht wird ebenfalls mit der Streichrakel eine Versiegelungsschicht aufgetragen, die ausschließlich aus dem in Beispiel 2 beschriebenen fluorhaltigen Copolymeren besteht, jedoch hier in einer 20 Gew.-%igen Lösung in Methylethylketon. Der Schichtkörper wird zunächst 10 min bei 70 °C getrocknet und dann 10 min bei 160 °C eingebrannt. Auftragsmenge der Versiegelungsschicht 15 g/m².

Vergleichsversuche

Wie in der Vorschrift unter B) und in Beispiel 4 beschrieben, werden PVC-Substrate, hergestellt gemäß der Vorschrift A), beschichtet, die entweder nur aus der Acrylatharzmischung b¹) (Polymethylmethacrylat und Weich-PVC 60 : 40) oder aus dem in Beispiel 4 angegebenen Gemisch einer solchen Acrylatharzmischung mit dem fluorhaltigen Copolymeren b¹) plus b²) bestehen. Zum Vergleich wird das gleiche PVC-Substrat ausschließlich mit dem fluorhaltigen Copolymeren von Beispiel 2 in 20 Gew.-%iger Lösung in Methylethylketon beschichtet. Bei der Fingernagelprobe läßt sich von dieser Vergleichsprobe die Versiegelungsschicht in einem Streifen abziehen, während bei den erfindungsgemäßen Verbundwerkstoffen auch durch vielmaliges Kratzen zwar eine Beschädigung der Versiegelungs- oder der Deckschicht, aber kein Abziehen erreicht werden kann.

**Patentansprüche**

1. Verbundwerkstoff, bestehend aus
   a) einer Substratschicht, die im wesentlichen aus Weich-PVC zusammengesetzt ist,
   b) einer ein- oder beidseitig auf diese Substratschicht aufgebrachten Deckschicht aus
       b¹) 5 bis 100 Gew.-% einer Acrylatharz-Abmischung bestehend aus 5 bis 60 Gew.-% an Weich-PVC oder einem innerlich weichgemachten Copolymerisat des Vinylchlorids und — ergänzend auf 100 gew.-% — einem Acrylatharz, und
       b²) 0 bis 95 Gew.-% eines fluorhaltigen Copolymeren, enthaltend 50 bis 20 Gew.-% an copolymerisierten Einheiten des Vinylidenfluorids, 10 bis 30 Gew.-% an copolymerisierten Einheiten des Hexafluorpropylens und copolymerisierte Einheiten des Tetrafluorethylens, wobei der Anteil der letzteren mindestens 30 Gew.-% im Copolymerisat beträgt, sowie copolymerisierte Einheiten eines anderen Fluorolefins oder Fluoralkylvinylethers in einer Menge von 0 bis 5 Gew.-%, mit der Maßgabe, daß bei einem Gehalt von 0 bis 15 Gew.-% des fluorhaltigen Copolymeren b[2)] in der Deckschicht auf dieser noch

c) eine Versiegelungsschicht vorgesehen ist, die ausschließlich aus dem unter b[2)] definierten fluorhaltigen Copolymeren besteht.

2. Verbundwerkstoff gemäß Anspruch 1, dadurch gekennzeichnet, daß die Substratschicht a) ein mit Weich-PVC beschichtetes Gewebe, Gewirke oder Vlies aus textilen Werkstoffen ist.

3. Verbundwerkstoff gemäß einem oder mehreren der Ansprüche 1 und 2, dadurch gekennzeichnet, daß die Substratschicht a) ein mit Weich-PVC beschichtetes Polyestergewebe ist.

4. Verbundwerkstoff gemäß einem oder mehreren der Ansprüche 1 bis 3, dadurch gekennzeichnet, daß das Acrylatharz der Deckschicht Polymethylmethacrylat ist.

5. Verbundwerkstoff gemäß einem oder mehreren der Ansprüche 1 bis 4, dadurch gekennzeichnet, daß das Acrylatharz der Deckschicht ein Gemisch aus Polymethylmethacrylat und Polybutylacrylat ist.

6. Verbundwerkstoff gemäß einem oder mehreren der Ansprüche 1 bis 5, dadurch gekennzeichnet, daß das Acrylatharz der Deckschicht abgemischt ist mit einem innerlich weichgemachten Copolymerisat des Vinylchlorids mit mindestens einem Monomeren aus der Gruppe Vinylacetat, Acrylsäureester, Methacrylsäureester, Maleinsäureester oder Fumarsäureester.

7. Verbundwerkstoff gemäß einem oder mehreren der Ansprüche 1 bis 6, dadurch gekennzeichnet, daß die Deckschicht aus 5 bis 30 Gew.-% der Acrylatharz-Abmischung b[1)] und 70 bis 95 Gew.-% des fluorhaltigen Copolymeren b[2)] besteht.

8. Verbundwerkstoff gemäß einem oder mehreren der Ansprüche 1 bis 7, dadurch gekennzeichnet, daß das fluorhaltige Copolymere der Versiegelungsschicht 45 bis 30 Gew.-% an copolymerisierten Einheiten des Vinylidenfluorids, 15 bis 25 Gew.-% an copolymerisierten Einheiten des Hexafluorpropylens und mindestens 30 Gew.-% an copolymerisierten Einheiten des Tetrafluorethylens sowie copolymerisierte Einheiten eines anderen Fluorolefins oder Fluoralkylvinylethers in einer Menge von 0 bis 5 Gew.-% enthält.

9. Verwendung des Verbundwerkstoffs gemäß einem oder mehreren der Ansprüche 1 bis 8 zur Abdeckung von Gegenständen, vorzugsweise im Außenbereich, oder für textiles Bauen.

## Claims

1. A composite material composed of :
   a) a substrate layer composed essentially of plasticised PVC, and
   b) a top layer, applied to one or both sides of this substrate layer and composed of :
      b[1)] 5 to 100 % by weight of a mixture of acrylic resins composed of 5 to 60 % by weight of plasticised PVC or and internally plasticised copolymer of vinyl chloride and — to bring the total up to 100 % by weight, — an acrylic resin, and
      b[2)] 0 to 95 % by weight of a fluorine-containing copolymer containing 50 to 20 % by weight of copolymerised units of vinylidene fluoride, 10 to 30 % by weight of copolymerised units of hexafluoropropylene and copolymerised units of tetrafluoroethylene, the proportion of the latter being at least 30 % by weight in the copolymer, and copolymerised units of another fluoroolefin or fluoroalkyl vinyl ether in an amount of 0 to 5 % by weight,
subject to the proviso that, if the content of the fluorine-containing copolymer b[2)] in the top layer is 0 to 15 % by weight, there is also provided, on the latter,
      c) a sealing layer which is solely composed of the fluorine-containing copolymer defined unter b[2)].

2. A composite material as claimed in claim 1, characterised in that the substrate layer a) is a woven or knitted fabric or nonwoven composed of textile materials which has been coated with plasticised PVC.

3. A composite material as claimed in one or more of claims 1 and 2, characterised in that the substrate layer a) is a polyester fabric which has been coated with plasticised PVC.

4. A composite material as claimed in one or more of claims 1 to 3, characterised in that the acrylic resin of the top layer is polymethyl methacrylate.

5. A composite material as claimed in one or more of claims 1 to 4, characterised in that the acrylic resin of the top layer is a mixture of polymethyl methacrylate and polybutyl acrylate.

6. A composite material as claimed in one or more of claims 1 to 5, characterised in that the acrylic resin of the top layer is mixed with an internally plasticised copolymer of vinyl chloride containing at least one monomer from the group comprising vinyl acetate, acrylic acid esters, methacrylic acid esters, maleic acid esters or fumaric acid esters.

7. A composite material as claimed in one or more of claims 1 to 6, characterised in that the top layer is composed of 5 to 30 % by weight of the acrylic resin mixture b[1)] and 70 to 95 % by weight of the fluorine-containing copolymer b[2)].

8. A composite material as claimed in one or more of claims 1 to 7, characterised in that the fluorine-containing copolymer of the sealing layer contains 45 to 30 % by weight of copolymerised units of vinylidene fluoride, 15 to 25 % by weight of copolymerised units of hexafluoropropylene and at least 30 % by weight of copolymerised units of tetrafluoroethylene as well as copolymerised units of another fluoroolefin or fluoroalkyl vinyl ether in an amount of 0 to 5 % by weight.

9. The use of the composite material as claimed in one or more of claims 1 to 8 for covering articles, preferably in the outdoor field, or for textile construction.

## Revendications

1. Matériau stratifié consistant en :

a) une couche de substrat, qui est composée essentiellement de PVC mou,

b) une couche de couverture appliquée d'un côté ou des deux côtés sur cette couche de substrat et qui consiste en :

$b^1$) 5 à 100 parties en poids d'un mélange à base de résine acrylique, consistant en 5 à 60 % en poids de PVC mou ou d'un copolymère à plastification interne du chlorure de vinyle et — de la quantité nécessaire pour compléter à 100 % — d'une résine acrylique,

$b^2$) 0 à 95 % en poids d'un copolymère fluoré, contenant 50 à 20 % en poids de motifs copolymérisés du fluorure de vinylidène, 10 à 30 % en poids de motifs copolymérisés de l'hexafluoropropylène et des motifs copolymérisés du tétrafluoréthylène, la proportion de ces derniers représentant au moins 30 % en poids dans le copolymère, ainsi que des motifs copolymérisés d'une autre fluoroléfine ou d'un éther -oxyde de fluoralkyle et de vinyle, présent en une quantité de 0 à 5 % en poids, à la condition que, dans le cas de la présence d'une proportion de 0 à 15 % en poids du copolymère fluoré $b^2$ dans la couche de couverture, on prévoit également sur celle-ci :

c) Une couche d'étanchéité consistant exclusivement en le copolymère fluoré défini en $b^2$).

2. Matériau stratifié selon la revendication 1, caractérisé en ce que la couche a) de substrat est une étoffe ou un tricot ou une nappe en des matériaux textiles enduits de PVC mou.

3. Matériau stratifié selon l'une des revendications 1 et 2 ou les deux, caractérisé en ce que : la couche de substrat a) est une étoffe en polyester enduite de PVC mou.

4. Matériau stratifié selon une ou plusieurs des revendications 1 à 3, caractérisé en ce que : la résine acrylique de la couche de couverture est du poly (méthacrylate de méthyle).

5. Matériau stratifié selon une ou plusieurs des revendications 1 à 4, caractérisé en ce que la résine acrylique de la couche de couverture est un mélange de poly (méthacrylate de méthyle) et de poly (acrylate de butyle).

6. Matériau stratifié selon une ou plusieurs des revendications 1 à 5, caractérisé en ce que la résine acrylique de la couche de couverture est mélangée à un copolymère à plastification interne du chlorure de vinyle ou au moins un monomère choisi parmi l'acétate de vinyle, un ester de l'acide acrylique, un ester de l'acide méthacrylique, un ester de l'acide maléique ou un ester de l'acide fumarique.

7. Matériau stratifié selon une ou plusieurs des revendications 1 à 6, caractérisé en ce que la couche de couverture consiste en 5 à 30 % en poids du mélange $b^1$) à base de résine acrylique et en 70 à 95 % en poids du copolymère fluoré $b^2$).

8. Matériau stratifié selon une ou plusieurs des revendications 1 à 7, caractérisé en ce que le copolymère fluoré de la couche d'étanchéité contient 45 à 30 % en poids de motifs copolymérisés du fluorure de vinylidène, 15 à 25 % en poids de motifs copolymérisés de l'hexafluoropropylène et au moins 30 % en poids de motifs copolymérisés du tétrafluoréthylène, ainsi que des motifs copolymérisés d'une autre fluoroléfine ou d'un éther-oxyde de fluoralkyle et de vinyle, présent en une proportion de 0 à 5 % en poids.

9. Utilisation des matériaux stratifiés selon une ou plusieurs des revendications 1 à 8, pour la couverture d'objets, avantageusement dans le domaine extérieur ou pour des réalisations de structures textiles.